# EUROPÄISCHE PATENTANMELDUNG

(11) **EP 1 247 847 A2**
(43) Veröffentlichungstag der Anmeldung: **09.10.2002**
(21) Anmeldenummer: 02005732.9
(22) Anmeldetag: 13.03.2002
(51) Int. Cl.: C09D 11/00

(54) **Inkjet-Tinte**

(30) Priorität: 07.04.2001 DE 10117504
(71) Anmelder: Degussa AG, 40474 Düsseldorf (DE)
(72) Erfinder: Karl, Alfons, 63584 Gründau (DE); Tauber, Gerd, 63500 Seligenstadt (DE); Kalbitz, Werner, 63517 Rodenbach (DE); Kleinhenz, Horst, 63538 Grosskrotzenburg (DE); McIntosh, Ralph, 63457 Hanau (DE); Lüdtke, Stephan, 63599 Biebergemünd (DE)

(57) **Zusammenfassung**

Die Inkjet-Tinte enthält mindestens ein Pigment und mindestens eine Verbindung mit einer mittleren Partikelgröße von größer 50 nm aus der Gruppe pyrogene Kieselsäure, hydrophobierte pyrogene Kieselsäure, pyrogene Mischoxide oder pyrogene Aluminiumoxide.

Sie werden herstellt durch Mischen von mindestens einem in Wasser dispergierten Pigment und einer Verbindung mit einer mittleren Partikelgröße von größer 50 nm aus der Gruppe pyrogene Kieselsäure, hydrophobierte pyrogene Kieselsäure, pyrogene Mischoxide oder pyrogene Aluminiumoxide.

Sie können zum Bedrucken von Papier oder Folien mit einem Inkjet-Drucker verwendet werden.

## Beschreibung

Die Erfindung betrifft Inkjet-Tinte, ein Verfahren zu ihrer Herstellung und ihre Verwendung.

Das Ink-Jet-Druckverfahren ist eine bekannte Vervielfältigungstechnik, bei der die Druckfarbe drucklos, also ohne Kontakt des Druckkopfes mit dem Druckmedium, übertragen wird. Dabei werden Tintentropfen aus einer Düse auf ein Empfangsmaterial gespritzt, wobei deren Ablenkung elektronisch steuerbar ist. Diese Technik, auch als druckloses Drucken bezeichnet, eignet sich insbesondere zum Bedrucken von Produkten mit unregelmäßigen Oberflächen und Verpackungen, weil zwischen Druckkopf und Bedruckstoff ein gewisser Abstand besteht. Das Druckverfahren ist sehr flexibel und relativ preiswert und wird deshalb auch im Computerdruck, etwa als Arbeitsplatzdrucker, verwendet. Zunehmend kommt das Ink-Jet-Verfahren auch im industriellen Bereich, etwa in der Außenwerbung, zur Anwendung. In der Außenwerbung muß die Tinte besondere Anforderungen an Lichtechtheit und Wasserbeständigkeit erfüllen. Als farbgebende Substanzen werden sowohl Farbstoffe wie auch Pigmente verwendet. Letztere haben den Vorteil gegenüber Farbstoffen, daß die Lichtechtheit sehr hoch ist.

Es sind Inkjet-Aufzeichnungsverfahren bekannt, wobei eine Reaktionslösung und eine Tinte auf einem Aufzeichnungsmaterial aufgebracht werden und die Tinte eine farbgebende Substanz, ein anorganisches kolloidales Oxid und ein wäßriges Lösungsmittel enthält und einen pH-Wert von nicht kleiner 9 hat (US 6,039,796).

Weiterhin sind Tinten bekannt, die hauptsächlich aus Wasser, einer wassermischbaren organischen Flüssigkeit, einem Farbstoff mit einem Gehalt von mindestens 0,5 Gew.-%, gegebenenfalls einem Netzmittel, gegebenenfalls einem Biozid, gegebenenfalls einem pH-Regulator und Kieselsäure Partikel mit einem Gehalt von 0,1 bis 5 Gew.-%, besteht (US 5,221,332).

Ferner sind pigmentierte Inkjet-Tinten bekannt mit wäßrigem Trägermaterial, einem Pigment und Aluminium stabilisierte kolloidale Kieselsäureteilchen mit einer mittleren Partikelgröße von 0,005 µm bis 0,050 µm (US 5,925,178).

Ein Nachteil der bekannten Inkjet-Tinten ist die geringe optische Dichte und Wasserbeständigkeit.

Es besteht somit die Aufgabe, Inkjet-Tinte mit höherer optischer Dichte und Wasserbeständigkeit herzustellen.

Gegenstand der Erfindung ist eine Inkjet-Tinte, welche dadurch gekennzeichnet ist, daß diese mindestens ein Pigment und mindestens eine Verbindung mit einer mittleren Partikelgröße von größer 50 nm, vorzugsweise größer 60 nm, aus der Gruppe pyrogene Kieselsäure, hydrophobierte pyrogene Kieselsäure, pyrogene Mischoxide oder pyrogene Aluminiumoxide enthält.

Als Pigment können Pigmentruße eingesetzt werden. Als Pigmentruße können Furnace-, Gasruß-, Channel- oder Flammruße eingesetzt werden. Beispiele hierfür sind Farbruß FW 200, Farbruß FW 2, Farbruß FW 2 V, Farbruß FW 1, Farbruß FW 18, Farbruß S 170, Farbruß S 160, Spezialruß 6, Spezialruß 5, Spezialruß 4, Spezialruß 4A, Printex 150 T, Printex U, Printex V, Printex 140 U, Printex 140 V, Printex 95, Printex 90, Printex 85, Printex 80, Printex 75, Printex 55, Printex 45, Printex 40, Printex P, Printex 60, Printex XE 2, Printex L 6, Printex L, Printex 300, Printex 30, Printex 3, Printex 35, Printex 25, Printex 200, Printex A, Printex G, Spezialruß 550, Spezialruß 350, Spezialruß 250, Spezialruß 100, Flammruß 101 der Firma Degussa AG. In einer bevorzugten Ausführungsform der Erfindung können Gasruße eingesetzt werden.

Als Pigmente können auch Si-haltige Ruße, bekannt aus DE 196 13 796, WO 96/37447 und WO 96/37547, oder metallhaltige Ruße, bekannt aus WO 98/42778, eingesetzt werden.

Als Pigmente können Farbpigmente eingesetzt werden. Als Farbpigmente können Blaupigmente, beispielsweise Sunfast Blau von Sun Chemical Company, Rotpigmente, beispielsweise Indofast Brilliant Scarlet von Bayer AG oder Sunfast Magenta von Sun Chemical Company, Grünpigmente, beispielsweise Heliogen Grün von BASF, oder Gelbpigmente, beispielsweise Sunbrite Gelb von Sun Chemical oder Gelb 131 AK von Ciba Chemicals, eingesetzt werden.

Als pyrogene Kieselsäure können Aerosil 90, Aerosil 200, Aerosil OX 50 oder Aerosil 300, als hydrophobierte pyrogene Kieselsäure können Aerosil R 8200, Aerosil R 202 oder Aerosil R 972, als pyrogene Mischoxide können Aerosil MOX 80 oder Aerosil MOX 170 und als pyrogenes Aluminiumoxid kann Aluminiumoxid C der Firma Degussa AG eingesetzt werden.

Der pH-Wert der Inkjet-Tinte kann kleiner 9, vorzugsweise kleiner 8,5, betragen.

Der Pigmentgehalt in der Inkjet-Tinte kann 1 bis 20 Gew.-%, bevorzugt 3-7 Gew.-%, betragen. Der Gehalt der Verbindung aus der Gruppe pyrogene Kieselsäure, hydrophobierte pyrogene Kieselsäure, pyrogene Mischoxide oder pyrogenes Aluminiumoxid kann 0,2 bis 10 Gew.-%, vorzugsweise 0,5 bis 5 Gew.-%, betragen.

Die Inkjet-Tinte kann zusätzlich Biozide, Entschäumer oder Netzmittel enthalten.

Ein weiterer Gegenstand der Erfindung ist ein Verfahren zur Herstellung der Inkjet-Tinte, welches dadurch gekennzeichnet ist, daß man mindestens ein Pigment, gegebenenfalls unter Zusatz von Netzmittel, in Wasser dispergiert und die Pigmentdispersion mit einer Verbindung mit einer mittleren Partikelgröße von größer 50 nm, vorzugsweise größer 60 nm, aus der Gruppe pyrogene Kieselsäure, hydrophobierte pyrogene Kieselsäure, pyrogene Mischoxide oder pyrogene Aluminiumoxide mischt.

Die Dispergierung des Pigmentes kann man zum Beispiel mit Perlmühlen, Ultraschall-Geräten oder einem Ultra-Turrax durchführen. Das Mischen der Verbindung aus der Gruppe pyrogene Kieselsäure, hydrophobierte pyrogene Kieselsäure, Mischoxide oder pyrogene Aluminiumoxide mit der Pigmentdispersion kann unter Rühren erfolgen.

Die erfindungsgemäße Inkjet-Tinte kann zum Bedrucken von Papier oder Folien mit dem Inkjet-Drucker verwendet werden.

Die erfindungsgemäße Inkjet-Tinte hat eine hohe optische Dichte und Wasserbeständigkeit.

### Beispiele 1-6

Die Inkjet-Tinten werden wie folgt hergestellt:
Als Tintenrezeptur wird eine 5%-ige Standardrezeptur verwendet. Die Rußdispersion besteht aus 15 Gew.-% Farbruß FW 18, 10 Gew.-% Hydropalat 3065, 0,2 Gew.-% AMP 90 und 74,8 % Wasser.
Hydropalat 3065 ist nichtionisches Netzmittel (Hersteller: Cognis). AMP 90 ist ein Amin (Hersteller: Angus Chemie).

Mit Hilfe eines Magnetrührstabes wird Triethylenglykol und Wasser vorgemischt und unter Rühren die Rußdispersion zugegeben. Danach wird die Verbindung aus der Gruppe pyrogene Kieselsäure, hydrophobierte pyrogene Kieselsäure, pyrogene Mischoxide oder pyrogene Aluminiumoxide mittels Pipette unter Rühren zugetropft. Es handelt sich hierbei um wässrige Dispersionen auf Basis von pyrogene Kieselsäure, hydrophobierte pyrogene Kieselsäure, pyrogene Mischoxide oder pyrogene Aluminiumoxide, beziehungsweise um kolloidale wässrige Lösungen von Kieseläsure (= Kieselsole). Die Rezeptur ist in Tabelle 1 dargestellt. Die angegebenen Gew.-Teile der Verbindungen aus der Gruppe pyrogene Kieselsäure, hydrophobierte pyrogene Kieselsäure, pyrogene Mischoxide oder pyrogene Aluminiumoxide sind auf die in der Klammer angegebene Konzentration bezogen (Beispiel 1: 4,00 Gew.-% bei 25%iger Lösung ergibt sich 1 Gew.-%)

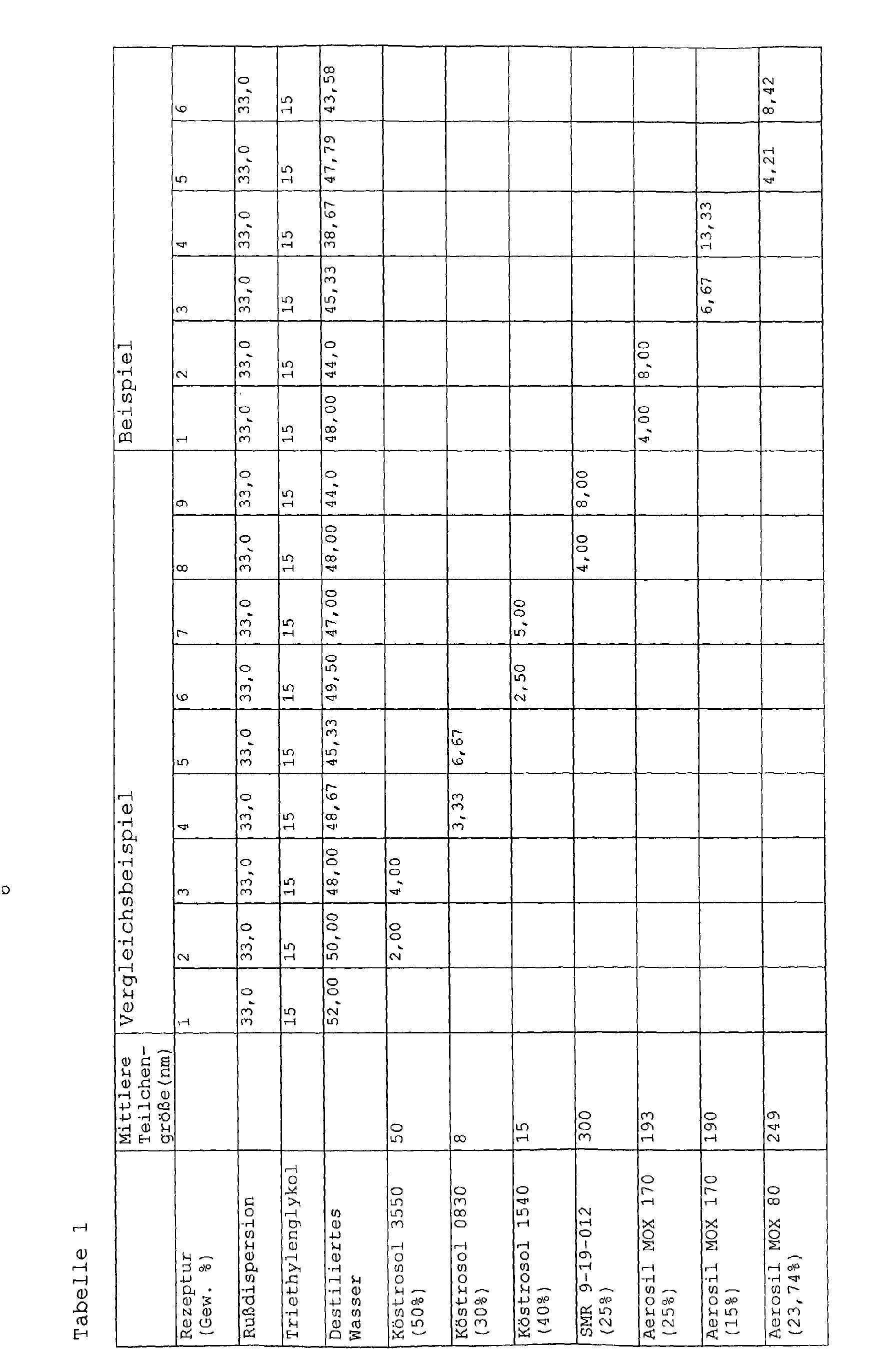

Köstrosol sind Kieselsole der Chemiewerke Bad Köstritz. SMR 9-19-012 ist ein kationisch stabilisiertes Kieselgel der Firma Grace. Aerosil MOX 80 und Aerosil MOX 170 sind pyrogene Mischoxide der Firma Degussa.

Die Tinte wird in zwei Teile aufgeteilt, wobei der erste Teil direkt gemessen wird und der zweite Teil eine halbe Minute mit Ultraschall dispergiert und anschließend gemessen wird.

Das SMR 9-19-012 bewirkte im Vergleichsbeispiel 8 und 9 eine Flokkulation der Tinte und wird deshalb nicht näher untersucht.

Die Viskosität der Tinten wird mit dem Physica Rheometer UDS 200 anhand des controlled shear rate (CSR)-Versuches bei einer Schergeschwindigkeit von 1000 s⁻¹ bestimmt (Tabelle 2).

Die Partikelgrößenverteilung der Rußsuspensionen wird nach dem Prinzip der dynamischen Lichtstreuung bestimmt.

Die Messungen erfolgen mit dem Gerät Horiba LB-500. Es wird das Frequenzspektrum des rückwärts gestreuten Lichtes analysiert, dadurch können die Suspensionen in der Regel in ihrer Originalkonzentration, d.h. ohne Verdünnung oder ähnliche Probenvorbereitung, gemessen werden. Der Messbereich beträgt 3 nm - 6 um.

Das Messsignal wird über 120 s aufgenommen. Die Auswertung erfolgt als Oberflächenverteilung. Zu ihrer Berechnung, die mit der Standard-Iterationszahl 50 (Calc.Level) durchgeführt wird, wird der Brechungsindex von Ruß mit 1,8-10i verwendet. Die mittlere Partikelgröße wird aus der Oberflächenverteilung bestimmt.

**Tabelle 2**

| | | | Viskosität bei Raumtemperatur [mPa*s] |
|---|---|---|---|
| Vergleichsbeispiel | 1 | dispergiert | 2,76 |
| | | nicht dispergiert | 2,76 |
| | 2 | dispergiert | 2,70 |
| | | nicht dispergiert | 2,78 |
| | 3 | dispergiert | 2,86 |
| | | nicht dispergiert | 2,89 |
| | 4 | dispergiert | 2,72 |
| | | nicht dispergiert | 2,76 |
| | 5 | dispergiert | 2,69 |
| | | nicht dispergiert | 2,76 |
| | 6 | dispergiert | 2,61 |
| | | nicht dispergiert | 2,92 |
| | 7 | dispergiert | 2,69 |
| | | nicht dispergiert | 2,76 |

| Beispiel | 1 | dispergiert | 2,82 |
|---|---|---|---|
| | | nicht dispergiert | 2,83 |
| | 2 | dispergiert | 3,04 |
| | | nicht dispergiert | 3,22 |
| | 3 | dispergiert | 2,81 |
| | | nicht dispergiert | 3,05 |
| | 4 | dispergiert | 3,20 |
| | | nicht dispergiert | 3,34 |
| | 5 | dispergiert | 2,88 |
| | | nicht dispergiert | 2,98 |
| | 6 | dispergiert | 3,11 |
| | | nicht dispergiert | 3,22 |

Die Dispergierung der Tinten führt zu einer Verringerung der Viskosität.

Mit dem Aufstrichgerät K Control Coater der Firma Erichsen Testing Equipment wird von den hergestellten Tintenproben Aufstriche auf Kompass Copy Office Papier mit einer Schichtdicke von 6 µm hergestellt und für die weiteren Untersuchungen über Nacht bei Raumtemperatur gelagert.

In Tabelle 3 sind die Ergebnisse der optischen Dichtemessung mit einem Densitometer dargestellt.

**Tabelle 3**

| | | | Optische Dichte |
|---|---|---|---|
| Vergleichsbeispiel | 1 | dispergiert | 1,08 |
| | | nicht dispergiert | 1,08 |
| | 2 | dispergiert | 1,08 |
| | | nicht dispergiert | 1,10 |
| | 3 | dispergiert | 1,13 |
| | | nicht dispergiert | 1,13 |
| | 4 | dispergiert | 1,11 |
| | | nicht dispergiert | 1,12 |
| | 5 | dispergiert | 1,10 |
| | | nicht dispergiert | 1,12 |
| | 6 | dispergiert | 1,12 |
| | | nicht dispergiert | 1,14 |
| | 7 | dispergiert | 1,16 |
| | | nicht dispergiert | 1,18 |
| Beispiel | 1 | dispergiert | 1,10 |
| | | nicht dispergiert | 1,14 |
| | 2 | dispergiert | 1,19 |
| | | nicht dispergiert | 1,22 |
| | 3 | dispergiert | 1,18 |
| | | nicht dispergiert | 1,20 |
| | 4 | dispergiert | 1,24 |
| | | nicht dispergiert | 1,29 |
| | 5 | dispergiert | 1,18 |
| | | nicht dispergiert | 1,15 |
| | 6 | dispergiert | 1,22 |
| | | nicht dispergiert | 1,23 |

Die erfindungsgemäßen Tinten, insbesondere Beispiel 4, haben eine höhere optische Dichte gegenüber den Vergleichsbeispielen. Die Dispergierung wirkt sich im allgemeinen negativ auf die optische Dichte aus.

### Beispiele 7-26

Die Inkjet-Tinten werden wie folgt hergestellt:

Als Tintenrezeptur wird eine 5%-ige Standardrezeptur verwendet. Die Rußdispersion besteht aus 15 Gew.-% Farbruß FW 18, 8 Gew.-% nichtionischem Netzmittelgemisch (6 Gew.-% Lutensol AO 30, 2 Gew.-% Hypermer CG 6), 0,2 Gew.-% AMP 90 und 76,8 % Wasser.

Lutensol AO 30 ist ein nichtionisches Netzmittel (Hersteller: BASF).

Hypermer CG 6 ist ein nichtionisches Netzmittel, bestehend aus vernetzter Polyoxyethylenacrylsäure (Hersteller:ICI).

Mit Hilfe eines Magnetrührstabes wird Triethylenglykol und Wasser vorgemischt und unter Rühren die Rußdispersion zugegeben. Danach wird die Verbindung aus der Gruppe pyrogene Kieselsäure, hydrophobierte pyrogene Kieselsäure, Mischoxide oder pyrogenes Aluminiumoxid mit dem Spatel eingerührt und für eine Minute mit Ultraschall dispergiert (Tabelle 4).

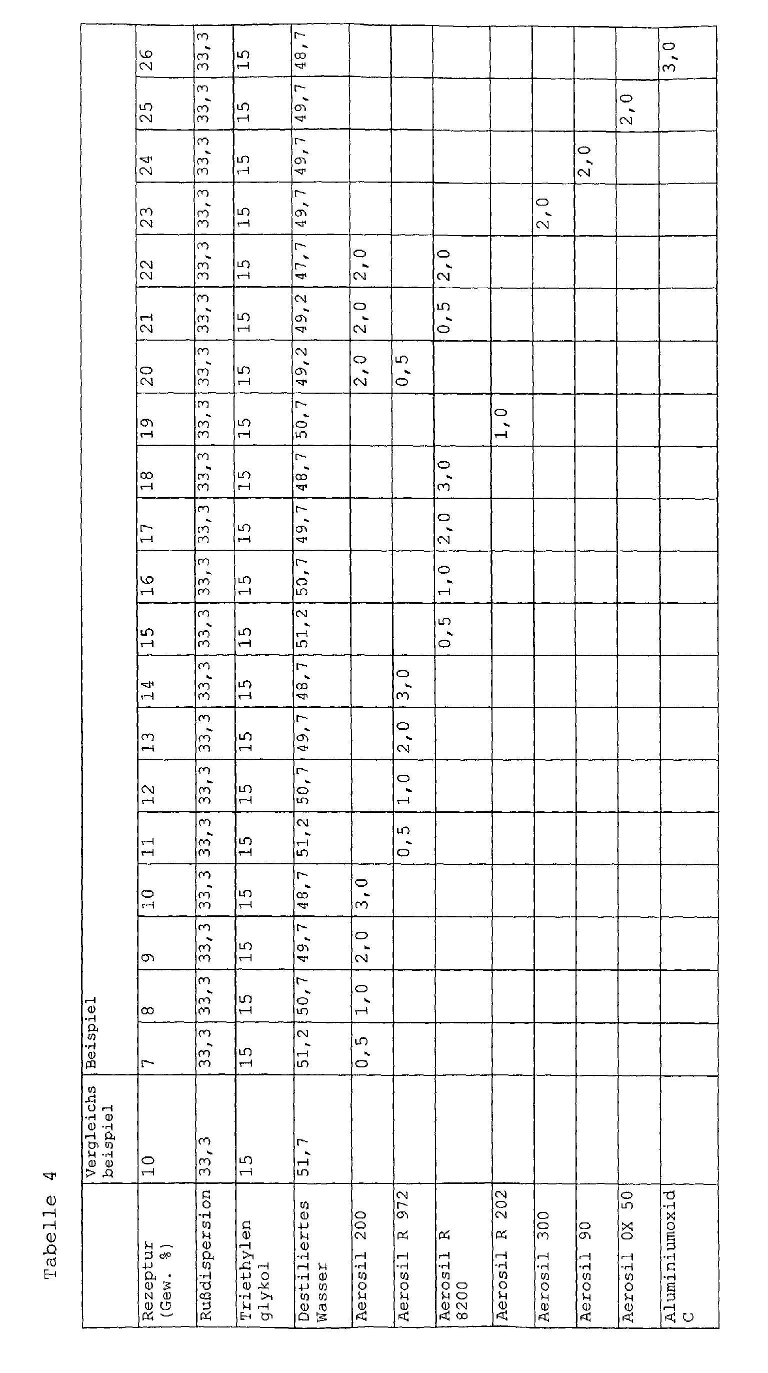

Aerosil 90, Aerosil 200, Aerosil 300 und Aerosil OX 50 sind hydrophile, hochdisperse, pyrogene Kieselsäuren der Firma Degussa. Aerosil R 972, Aerosil 8200 und Aerosil R 202 sind hydrophobe, pyrogene Kieselsäuren der Firma Degussa. Aluminiumoxid C ist ein pyrogenes Aluminiumoxid der Firma Degussa.

Mit dem Aufstrichgerät K Control Coater der Firma Erichsen Testing Equipment wird von den hergestellten Tintenproben Aufstriche auf HP-Inkjet-Papier und Xerox-Kopierpapier mit einer Schichtdicke von 6 µm hergestellt und für die weiteren Untersuchungen über Nacht bei Raumtemperatur gelagert.

In Tabelle 5 sind die Ergebnisse der optischen Dichtemessung mit einem Densitometer dargestellt.

**Tabelle 5**

| | | Optische Dichte | |
|---|---|---|---|
| | | Xerox-Kopierpapier | HP-Inkjet Papier |
| Vergleichsbeispiel | 10 | 1,14 | 1,51 |
| Beispiel | 7 | 1,28 | 1,59 |
| | 8 | 1,32 | 1,65 |
| | 9 | 1,56 | 1,78 |
| | 10 | 1,64 | 1,83 |
| | 11 | 1,20 | 1,50 |
| | 12 | 1,21 | 1,52 |
| | 13 | 1,36 | 1,60 |
| | 14 | 1,39 | 1,66 |
| | 15 | 1,21 | 1,51 |
| | 16 | 1,16 | 1,52 |
| | 17 | 1,32 | 1,51 |
| | 18 | 1,37 | 1,56 |
| | 19 | 1,26 | 1,56 |
| | 20 | 1,52 | 1,72 |
| | 21 | 1,56 | 1,71 |
| | 22 | 1,51 | 1,70 |
| | 23 | 1,51 | 1,70 |
| | 24 | 1,34 | 1,57 |
| | 25 | 1,24 | 1,52 |
| | 26 | 1,58 | 1,69 |

Die erfindungsgemäßen Tinten, insbesondere die Beispiele 9, 10, 20-23 haben eine hohe optische Dichte gegenüber dem Vergleichsbeispiel.

Zur Bestimmung der Wasserbeständigkeit wird ein Wassertropfen auf den Tintenaufstrich getropft. Nach 15 s, 30 s, 45 s und 60 s wird jeweils die Tropfenpenetration in das Papier visuell nach folgender Notenskala beurteilt: keine (Note 0) bis starke (Note 4) Wasserpenetration in den Tintenaufstrich. Die Ergebnisse sind in Tabelle 6 enthalten.

**Tabelle 6**

| | | Wasserbeständigkeit | | | | | | | |
|---|---|---|---|---|---|---|---|---|---|
| | | Xerox-Kopierpapier | | | | HP- Inkjet Papier | | | |
| | | 15s | 30s | 45s | 60s | 15s | 30s | 45s | 60s |
| Vergleichsbeispiel | 10 | 1 | 2 | 2- | 3+ | 2- | 2- | 2- | 2- |
| Beispiel | 7 | 1 | 2- | 2- | 3+ | 2- | 3+ | 3 | 3- |
| | 8 | 1 | 2- | 2- | 3+ | 2- | 3+ | 3 | 3- |
| | 9 | 1- | 3+ | 3 | 3 | 2- | 3 | 3- | 4+ |
| | 10 | 2 | 3 | 3- | 3- | 3 | 3 | 3- | 4+ |
| | 11 | 1 | 1- | 2+ | 2 | 1 | 1- | 2 | 2- |
| | 12 | 1 | 1- | 2+ | 2 | 1 | 1- | 2 | 2- |
| | 13 | 1 | 1- | 2+ | 2+ | 1 | 1- | 2 | 2- |
| | 14 | 1 | 1- | 2+ | 2+ | 1 | 1- | 2 | 2- |
| | 15 | 0 1 | 1 | 1 | 2+ | 0 | 1 | 1 | 2 |
| | 16 | 0 | 1 | 1 | 2+ | 0 | 1+ | 1 | 1 |
| | 17 | 0 | 0 | 0 | 0 | 0 | 0 | 1 | 1 |
| | 18 | 0 | 0 | 0 | 0 | 0 | 0 | 0 | 1+ |
| | 19 | 0 | 1+ | 1 | 1 | 0 | 1 | 1- | 2 |
| | 20 | 2 | 3 | 3- | 3- | 2 | 2- | 3+ | 3 |
| | 21 | 2 | 2- | 3 | 3 | 1- | 2 | 2 | 2- |
| | 22 | 1 | 1- | 1- | 1- | 0 | 1 | 2 | 2- |
| | 23 | 1- | 3+ | 3- | 3- | 2- | 3 | 3- | 4+ |
| | 24 | 1 | 1- | 2- | 2- | 1 | 1- | 2- | 2- |
| | 25 | 1 | 1- | 2- | 2- | 1 | 2 | 2 | 2- |
| | 26 | 1 | 2 | 2 | 2 | 3 | 3- | 3- | 4+ |

Die Beispiele 17 und 18 haben eine deutlich größere Wasserbeständigkeit als das Vergleichsbeispiel.

Der Farbruß FW 18 ist ein Gasruß der Degussa AG mit einer mittleren Primärteilchengröße von 15 nm.

## Patentansprüche

1. Inkjet-Tinte, **dadurch gekennzeichnet, daß** diese mindestens ein Pigment und mindestens eine Verbindung mit einer mittleren Partikelgröße von größer 50 nm aus der Gruppe pyrogene Kieselsäure, hydrophobierte pyrogene Kieselsäure, pyrogene Mischoxide oder pyrogene Aluminiumoxide enthält.

2. Inkjet-Tinte nach Anspruch 1, **dadurch gekennzeichnet, daß** der pH-Wert kleiner 9 beträgt.

3. Verfahren zur Herstellung der Inkjet-Tinte nach Anspruch 1 und 2, **dadurch gekennzeichnet, daß** man mindestens ein Pigment, gegebenenfalls unter Zusatz von Netzmittel, in Wasser dispergiert und die Pigmentdispersion mit einer Verbindung mit einer mittleren Partikelgröße von größer 50 nm aus der Gruppe pyrogene Kieselsäure, hydrophobierte pyrogene Kieselsäure, pyrogene Mischoxide oder pyrogene Aluminiumoxide mischt.

4. Verwendung der Inkjet-Tinte nach Anspruch 1, zum Bedrucken von Papier oder Folien mit einem Inkjet-Drucker.
